# EUROPÄISCHE PATENTSCHRIFT

(11) **EP 0 940 324 B1**
(45) Veröffentlichungstag und Bekanntmachung des Hinweises auf die Patenterteilung: **04.09.2002**
(21) Anmeldenummer: 99101610.6
(22) Anmeldetag: 03.02.1999
(51) Int. Cl.: B62D 25/08, B62D 21/11, B62D 21/12, B60G 9/00

(54) **Fahrgestell eines schweren Nutzfahrzeuges**
Chassis for a heavy-duty utility vehicle
Chassis pour véhicule utilitaire lourd

(30) Priorität: 04.03.1998 DE 19809269
(43) Veröffentlichungstag der Anmeldung: 08.09.1999
(73) Patentinhaber: MAN Nutzfahrzeuge Aktiengesellschaft, 80976 München (DE)
(72) Erfinder: Rühmann, Gerd, Dipl.-Ing. (FH), 82229 Seefeld (DE); Sigl, Johann, Dipl.-Ing. (FH), 82266 Becher (DE); Breitling, Ulrich, Dr.-Ing., 81245 München (DE); Nickels, Thomas, 81541 München (DE); Hintereder, Jürgen, Dipl.-Ing. (FH), 85586 Poing (DE); Neukam, Michael, Dipl.-Ing. (TU), 82110 Germering (DE); Lutsch, Helmar, Dipl.-Ing., 81927 München (DE)

(56) Entgegenhaltungen:
- EP-A- 0 636 531
- EP-A- 0 678 405
- DE-A- 4 226 500
- DE-A- 19 624 242
- US-A- 4 168 086
- US-A- 5 641 181

## Beschreibung

Die Erfindung betrifft ein Fahrgestell eines schweren Nutzfahrzeugs mit Merkmalen gemäß dem Oberbegriff des Anspruchs 1. Ein gattungsgemäßes Fahrgestell ist aus der DE-A-196 24 242 bekannt.

Die DE 21 42 079 A1 beschreibt eine luft- oder schraubengefederte Verbundlenker-Vorderachse mit einem Starrachskörper und zwei fest mit diesem verbundenen Längslenkern. Zur Querführung ist ein Panhardstab vorgesehen, der einenendes an einem Längslenker und andemendes an der gefederten Masse des Fahrzeugs angelenkt ist.

Demgegenüber ist es Aufgabe der Erfindung, innerhalb eines Fahrgestells eines schweren Nutzfahrzeugs die Aufhängung einer Starrachse einschließlich Federung und Dämpfung auf möglichst platzsparende Weise und so darzustellen, daß sich ein in Verbindung mit Starrachsen bisher nicht erreichter Fahr- und Federungskomfort und außerdem im Bereich der Starrachse ein hinreichend großer Freiraum über deren Mittelabschnitt sowie stabile Rahmenverhältnisse erzielen lassen.

Diese Aufgabe ist bei einem Fahrgestell der gattungsgemäßen Art erfindungsgemäß durch die im Anspruch 1 angegebenen Merkmale gelöst.

Vorteilhafte Ausgestaltungen und Weiterbildungen sowie Anwendungen der Erfindung sind in den Unteransprüchen angegeben.

Aufgrund des Vorsehens des erfindungsgemäßen U-förmigen Querträgers ergibt sich im Bereich der Starrachse ein entsprechend stabilisierter Rahmenabschnitt sowie ein großer Freiraum zwischen. den Rahmen-Längsträgern und über der Querträger-Quertraverse, was dort den ungehinderten Einbau anderer Fahrzeugteile, wie eines Antriebsaggregates in einem Lastkraftwagen oder eines Mittelganges in einem Omnibus, ermöglicht. Außerdem stellt das Vorsehen von Feder-Dämpfer-Beinen in einem schweren Nutzfahrzeug ein Novum dar, weil solche Federbeine bisher nur in hochwertigen Personenkraftwagen zur Anwendung kamen. Das Anschließen der Feder-Dämpfer-Beine jeweils oben an einem am Fahrzeugrahmen befestigten Federbeinhalter und unten an einer Anlenkstelle am Starrachskörper, insbesondere so weit wie möglich außen im Sinne einer größtmöglichen Federspur mit von vorne gesehen gepfeilter Anordnung der Federbeine, ergibt einen gewünscht hohen Fahrund Federungskomfort. Besonders vorteilhaft kommt dies zum Tragen, wenn die Starrachse nach Art einer selbststabilisierenden Verbundlenkerachse ausgebildet ist, mit Merkmalen, wie im Anspruch 2 angegeben. Das erfindungsgemäße Heranziehen und Ausgestalten eines der beiden Federbeinhalter als Anlenk-, Halte- und Abstützorgan für den Panhardstab erspart einen ansonsten für diesen Zweck notwendigen eigenen Lagerbock an einer anderen Stelle des Rahmens und schränkt zudem den innerhalb des U-förmigen Querträgers gegebenen Freiraum nicht unnötig ein. Außerdem hilft dies Herstellungs- und Montagekosten sparen.

Nachstehend ist die Erfindung anhand der Zeichnung und darin aufgezeigter Beispiele in Verbindung mit einer ebenso neuartigen, nach Art einer selbststabilisierenden Verbundlenkerachse konstruierten Starrachse näher erläutert. In der Zeichnung zeigen:

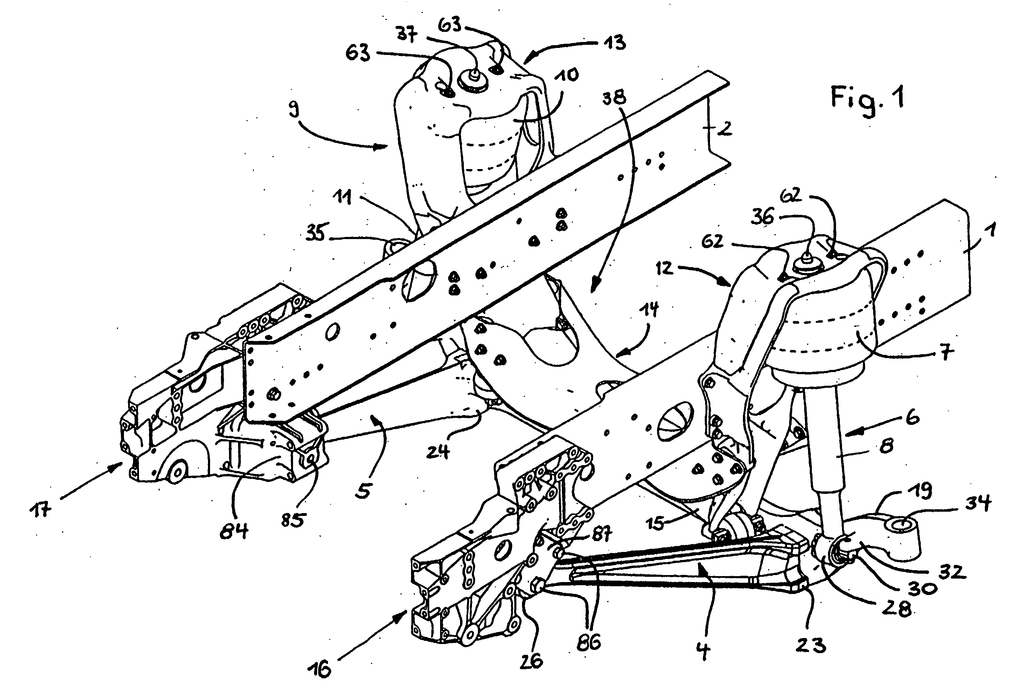

- Fig. 1: perspektivisch den vorderen Endbereich des Fahrgestells eines Frontlenker-Lastkraftwagen (als Beispiel eines schweren Nutzfahrzeuges) mit der erfindungsgemäßen Starrachse samt Aufhängung, Federung und Dämpfung,

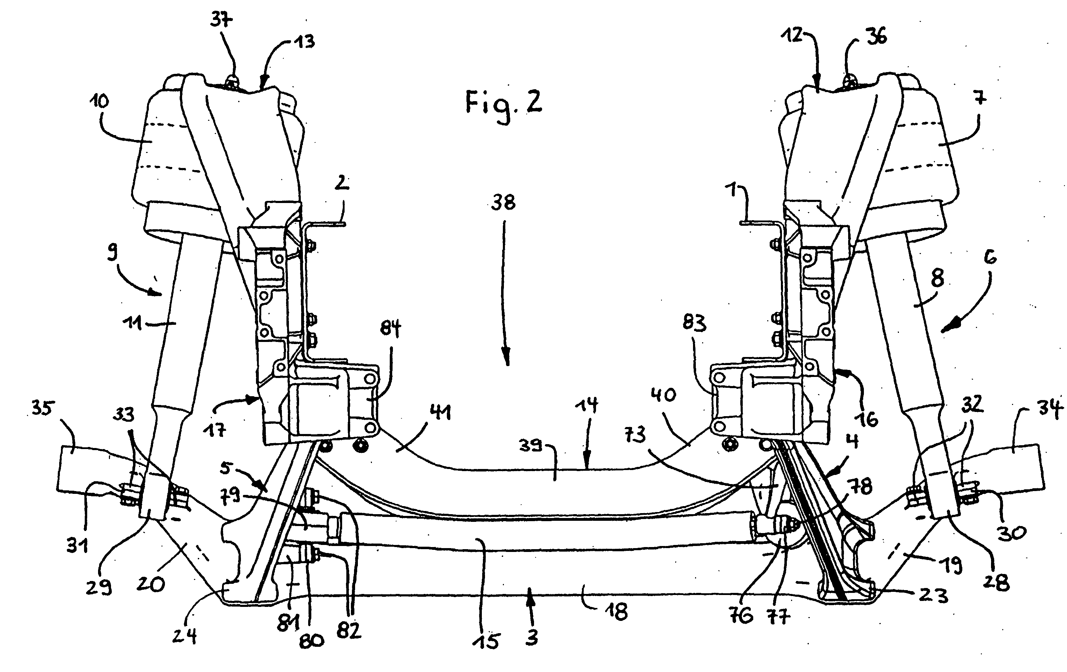

- Fig. 2: den Fahrgestellbereich gemäß Fig. 1 in Ansicht von vorn,

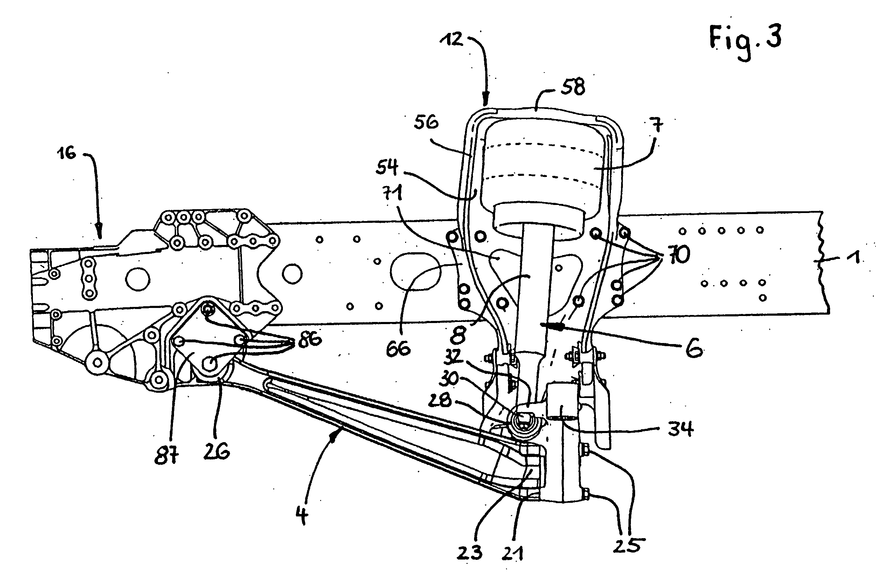

- Fig. 3: den Fahrgestellbereich gemäß Fig. 1 in Seitenansicht,

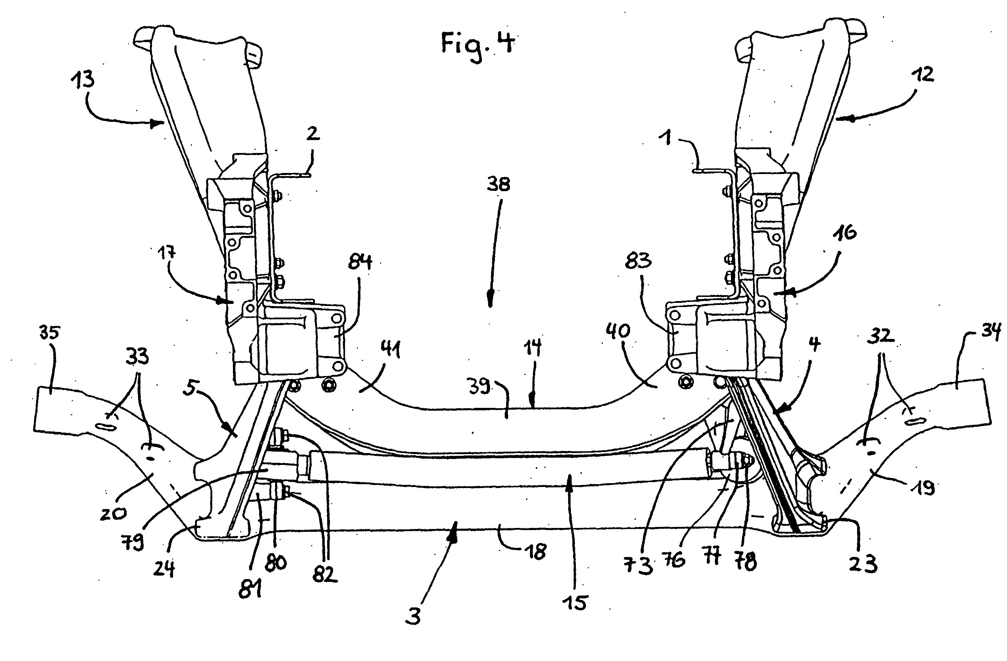

- Fig. 4: die Darstellung gemäß Fig. 2 ohne Federbeine,

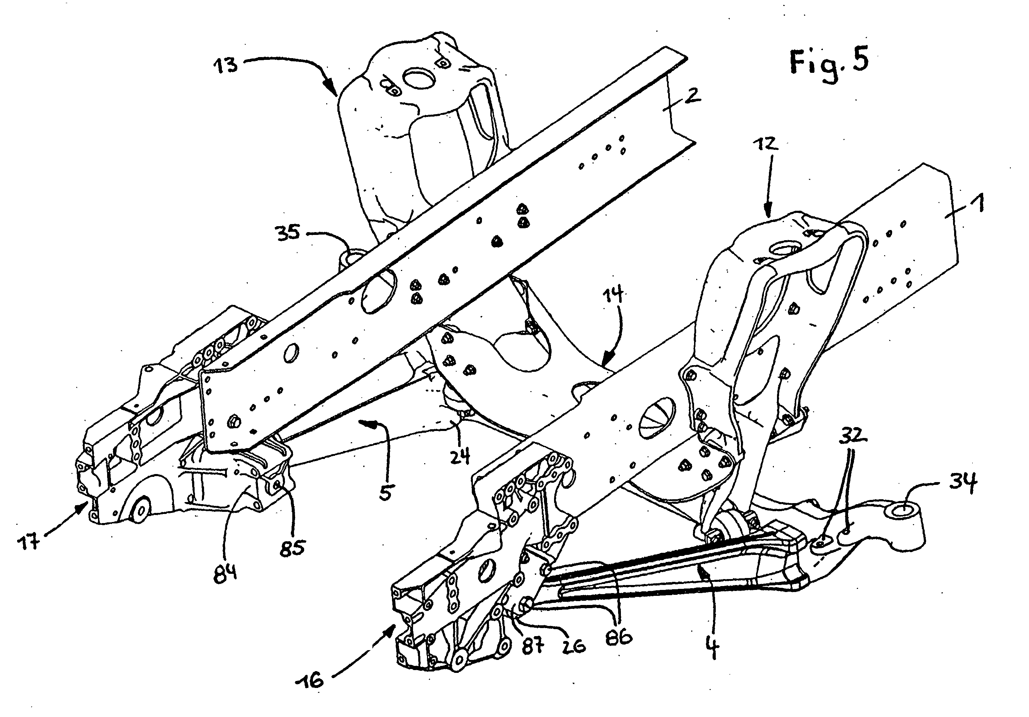

- Fig. 5: die Darstellung gemäß Fig. 1 ohne Federbeine,

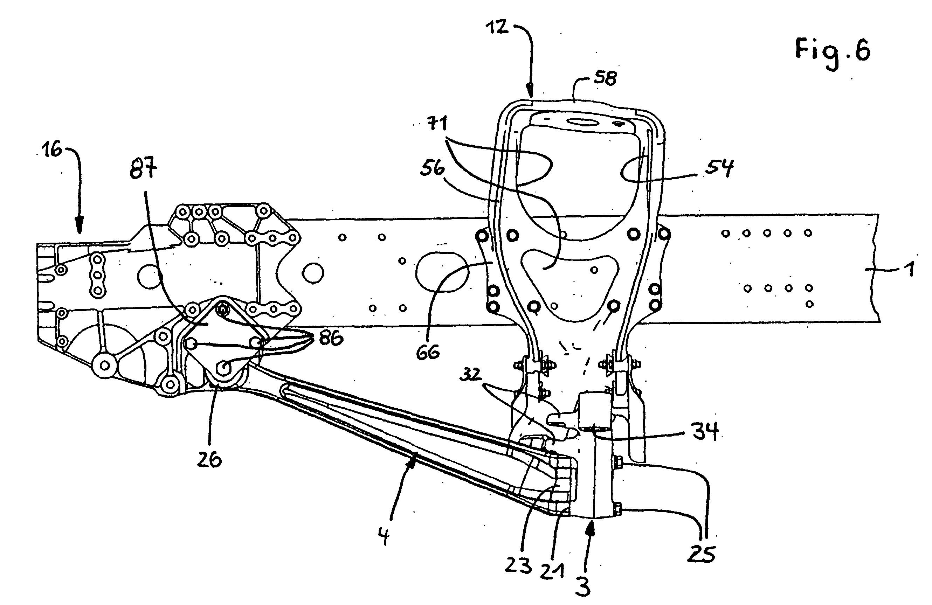

- Fig. 6: die Darstellung gemäß Fig. 3 ohne Federbeine,

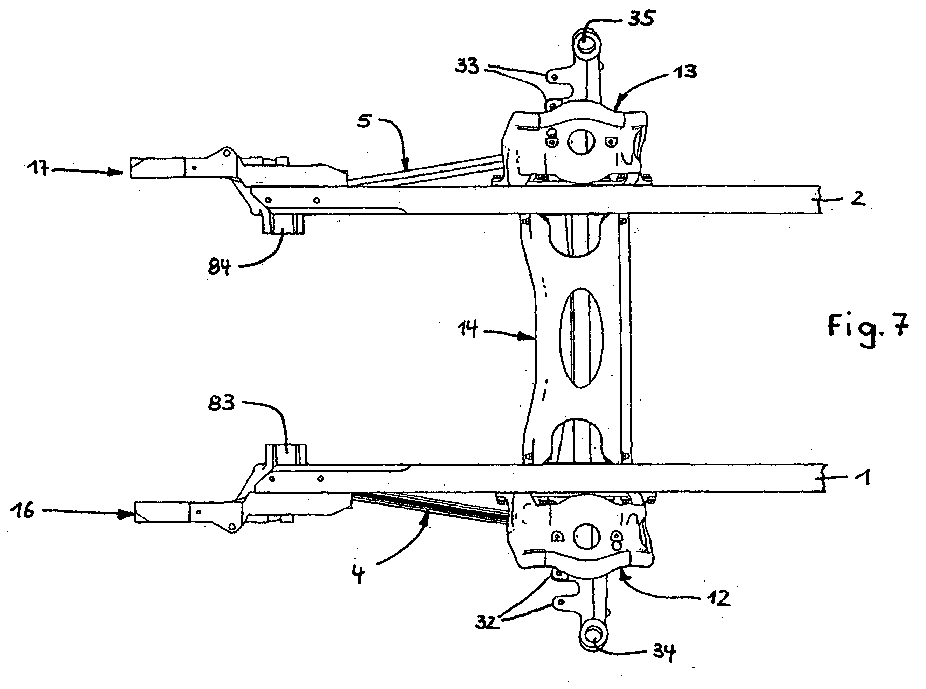

- Fig. 7: die Darstellung gemäß Fig. 4 in Draufsicht ohne Panhardstab,

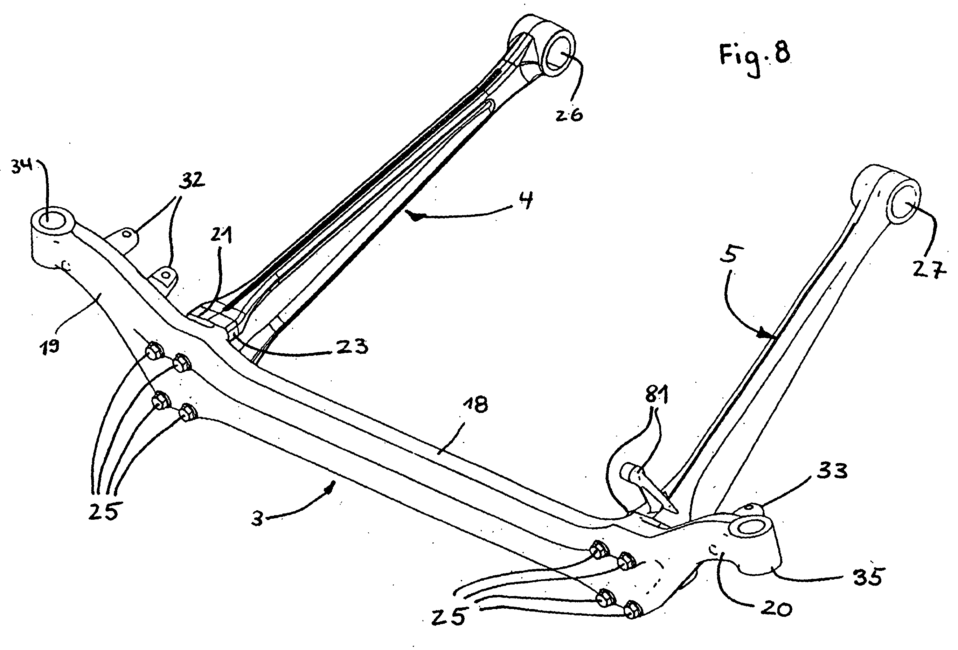

- Fig. 8: den Starrachskörper-Längslenker-Verbund aus den Fig. 1 bis 7 in perspektivischer Alleindarstellung,

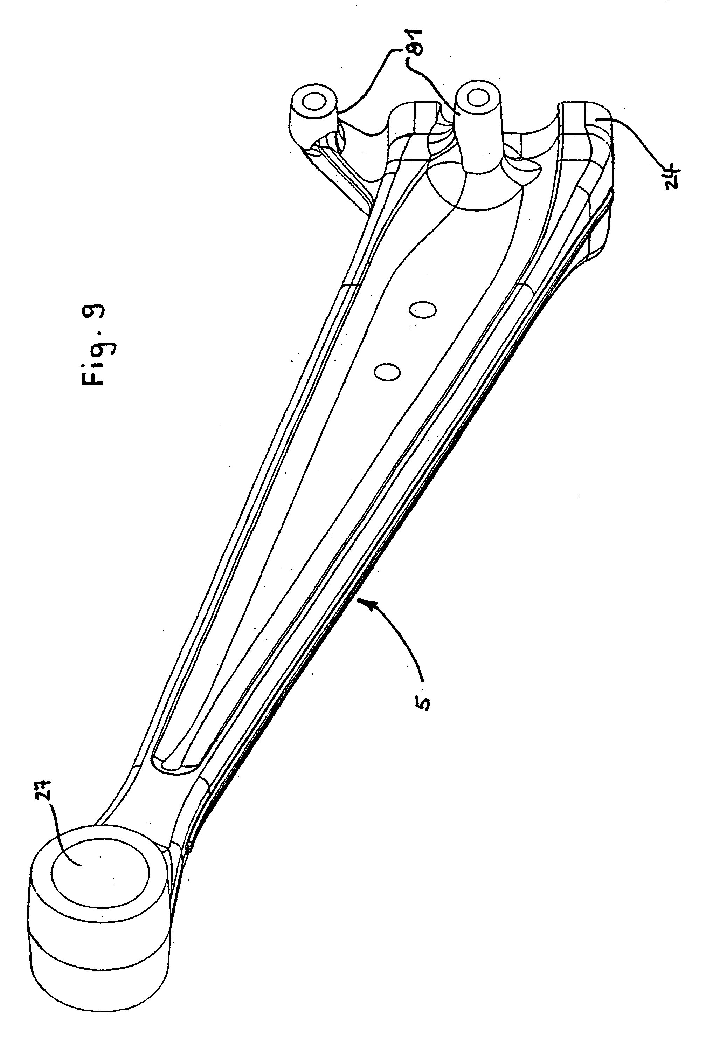

- Fig. 9: einen Längslenker aus dem Starrachskörper-Längslenker-Verburid gemäß Fig. 8 in perspektivischer Alleindarstellung,

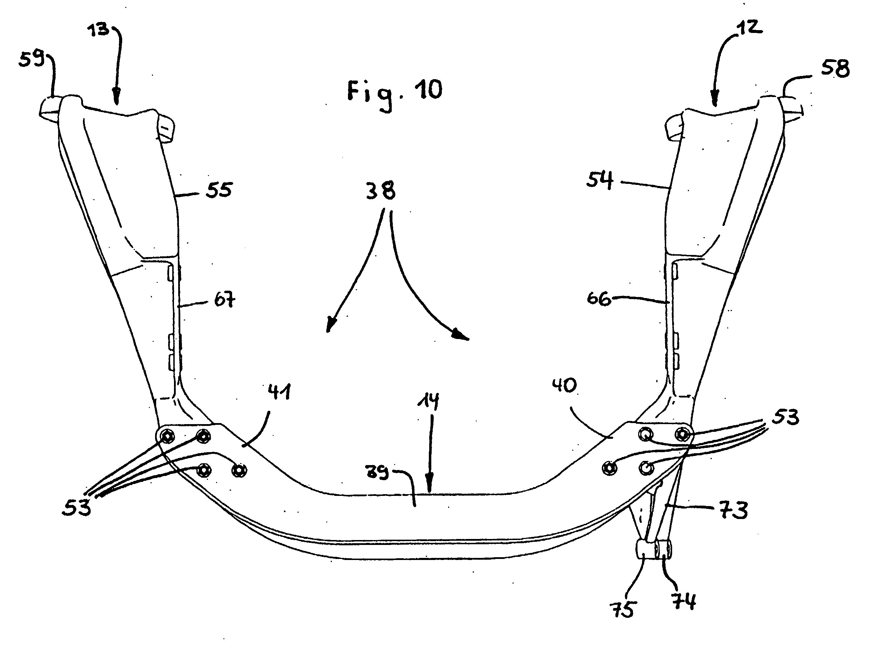

- Fig. 10: den erfindungsgemäßen U-förmigen Querträger in vorderansichtiger Alleindarstellung,

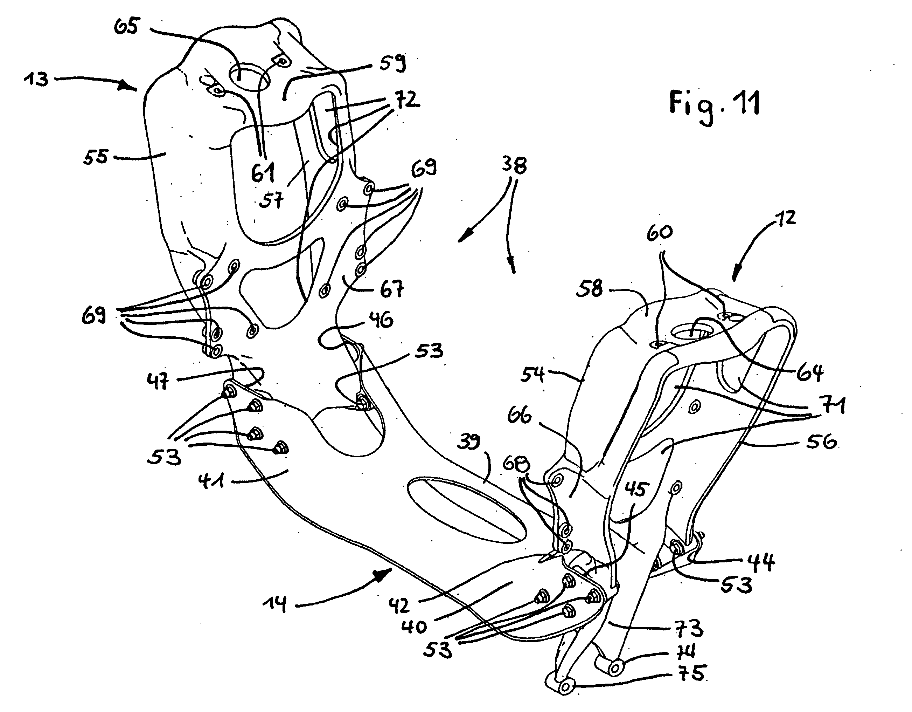

- Fig. 11: den erfindungsgemäßen Querträger in perspektivischer Alleindarstellung,

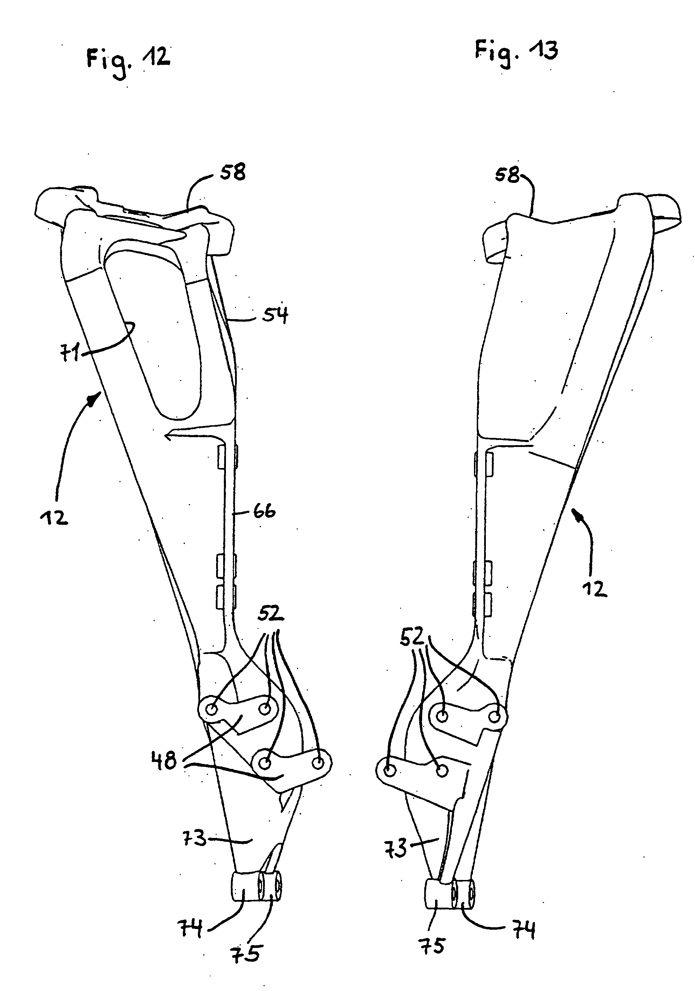

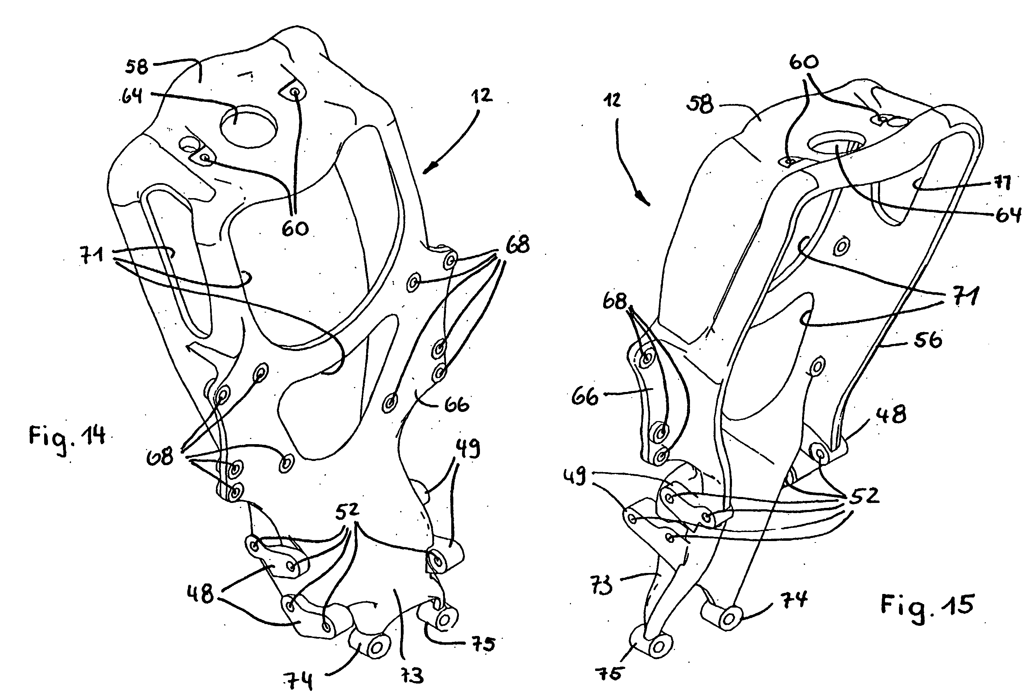

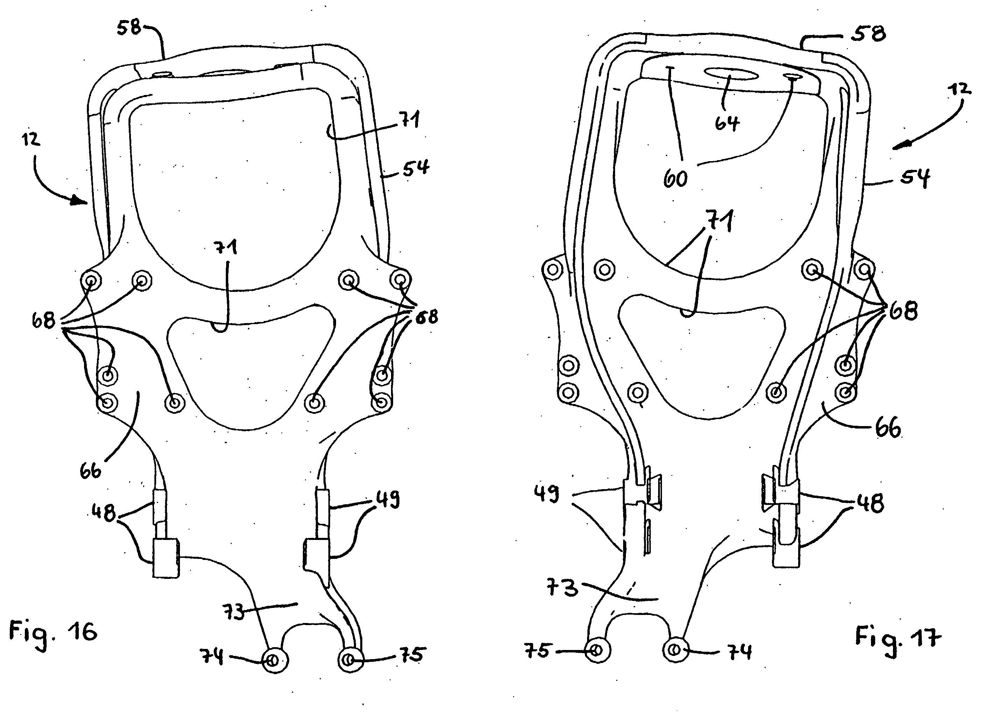

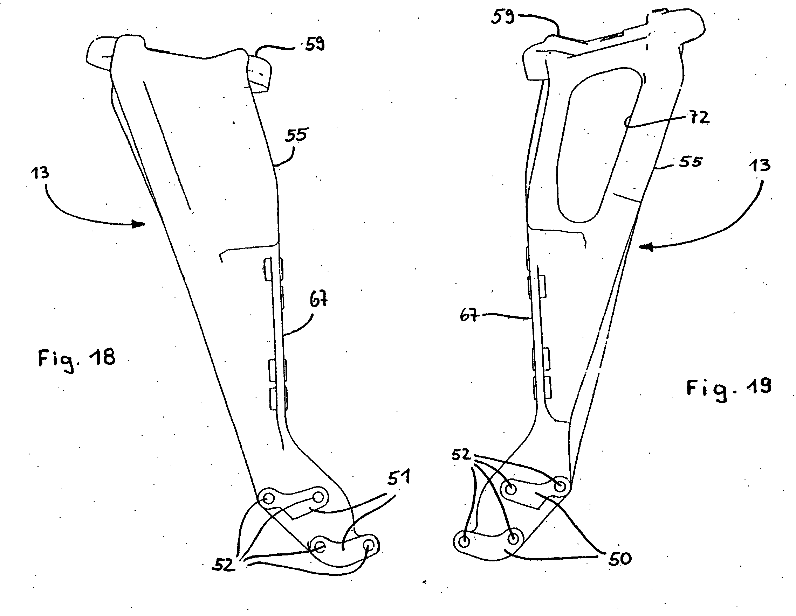

- Fig. 12 bis 17: je eine unterschiedliche Ansicht des einen der. beiden Federbeinhalter aus dem erfindungsgemäßen Querträger, dem die Zusatzfunktion, eine Anlenkstelle für den Panhardstab zu bilden, aufgeprägt ist,

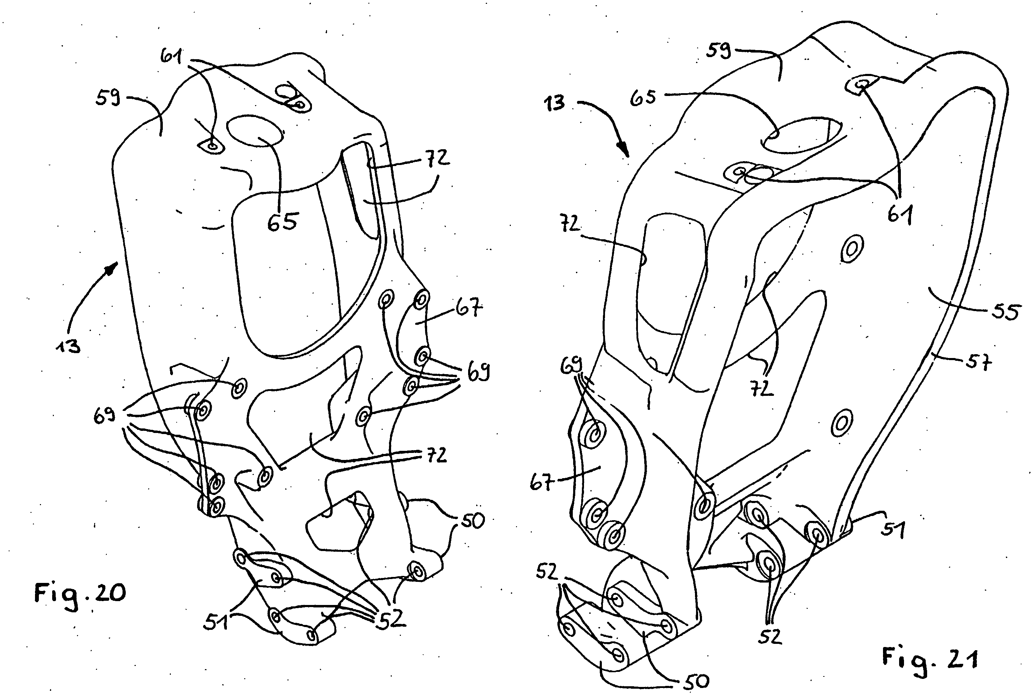

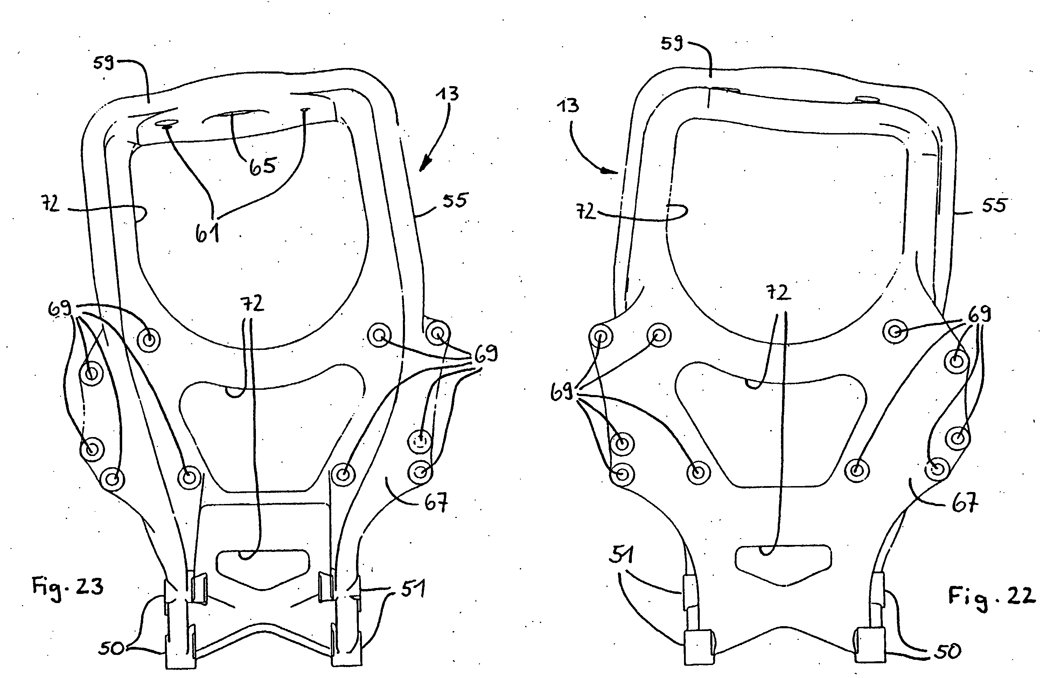

- Fig. 18 bis 23: je eine unterschiedliche Ansicht des anderen der beiden Federbeinhalter aus dem erfindungsgemäßen Querträger.

Das erfindungsgemäße Fahrgestell ist Bestandteil eines schweren Nutzfahrzeuges, bei dem es sich um einen Lastkraftwagen, insbesondere der Frontlenker-Bauart mit kippbarem Fahrerhaus, mit An- und Aufbauten der verschiedensten Art, auch solche für Spezialeinsatzzwecke, eine Sattelzugmaschine oder um einen Omnibus handeln kann. Die erfindungsgemäße Starrachse kann als Vorderachse, Nachlaufachse oder Vorlaufachse mit lenkbaren oder nicht-lenkbaren Rädern zur Anwendung kommen. In der Zeichnung ist als Beispiel für die erfindungsgemäße Starrachse eine Vorderachse aufgezeigt. Vom Fahrgestell sind in der Zeichnung als Teile des Rahmens dessen beide Längsträger mit 1 und 2 bezeichnet.

Die dargestellte Starrachse besteht einschließlich aller Aufhängungs-, Federungs- und Dämpfungsorgane aus folgenden Hauptteilen, nämlich einem Starrachskörper 3, einem linken Längslenker 4 und rechten Längslenker 5, einem linken Federbein 6 mit Luft- oder Schraubenfeder 7 und hierzu koaxialem Stoßdämpfer 8, einem rechten Federbein 9 mit Luft- oder Schraubenfeder 10 und hierzu koaxialem Stoßdämpfer 11, einem Panhardstab 15 und einem -. von vorne gesehen - U-förmigen Querträger 38, der sich aus einem linken Federbeinhalter 12, einem rechten Federbeinhalter 13 und einer Quertraverse 14 zusammensetzt.

In der Zeichnung sind ein linker Multifunktionslagerschild mit 16 und ein rechter Multifunktionslagerschild mit 17 bezeichnet. Jeder derselben ist außen an einem Rahmen-Längsträger 1 bzw. 2 befestigt und dient zur rahmenseitigen Anlenkung der erfindungsgemäßen Starrachse und im vorliegenden Beispiel darüber hinaus auch als Halte-, Stütz- und Lagerorgan für eine größere Anzahl anzubauender Fahrzeugteile.

Die erfindungsgemäße Starrachse bringt ihre Vorteile besonders dann zur Geltung, wenn sie - wie dargestellt - nach Art einer selbststabilisierenden Verbundlenkerachse ausgebildet ist In diesem Fall ist die Starrachse grundsätzlich derart konstruiert, daß zu ihrer Querführung nur der Panhardstab 15 notwendig ist und sie ohne den bisher bei schweren Nutzfahrzeugen zur Beschränkung des Wankens notwendigen U-förmigen Stabilisator auskommt, aber dessen Funktion einem Bauteilverbund aufgeprägt ist, der sich aus dem Starrachskörper 3 und den beiden an diesem befestigten Längslenkern 4, 5 zusammengesetzt. Dieser Zweckbestimmung und Funktion gehorchend ist daher der Starrachskörper 3 in einem geraden Mittelbereich 18 zwischen den beiden an ihm angeschlossenen Längslenkern 4, 5 definiert torsionsfähig ausgebildet. Der je nach Anwendungsfall durchgehend gerade oder - wie in der Zeichnung dargestellt- nach Art einer gekröpften Faustachse ausgebildete Starrachskörper 3 wird durch Schmieden oder Gießen hergestellt und anschließend an bestimmten Stellen spanabhebend nach- bzw. endbearbeitet. Das Profil und die Größe des Querschnitts seines Mittelbereiches 18 werden im Sinne der gewünschten Torsionsfähigkeit auf den jeweiligen fahrzeugspezifischen Anwendungsfall abgestimmt. Am Übergangsbereich zwischen geradem Mittelbereich 18 und jedem beiderseits desselben anschließenden, im dargestellten Beispiel hochgekröpften Endabschnitt 19 bzw. 20 ist stirnseitig - im Fall einer gezogenen Achse vorne und im Fall einer geschobenen Achse hinten - am Starrachskörper 3 jeweils ein Ansatz bzw. Vorsprung mit nachbearbeiteter Anlagefläche 21 bzw. 22 mitangeformt, an der jeweils einer der beiden Längslenker 4, 5 mit seinen achskörperseitigen Fuß 23 bzw. 24 kraftschlüssig und gegebenenfalls auch noch formschlüssig angeflanscht ist. Die Anlagefläche 21 bzw. 22 erstreckt sich dabei mit großer Breite vorzugsweise über die ganze am Starrachskörper 3 verfügbare Höhe, um am Starrachskörper 3 eine möglichst große Anschlußbasis für den jeweiligen Längslenker 4 bzw. 5 bereitzustellen. Zur Befestigung sind je Längslenker 4, 5 mehrere Schrauben 25, z. B. je 4 Stück, vorgesehen, die von der gegenüberliegenden Seite des Starrachskörpers 3 her durch in diesem ausgebildete Durchgangsbohrungen hindurchgeführt sowie in hierzu fluchtende Sacklochgewindebohrungen im jeweiligen Längslenker-Fuß 23 bzw. 24 eingeschraubt sind, und zwar mit einer hohen Vorspannkraft und so gesichert, daß der Starrachskörper-Längslenker-Verbund bei allen im Fahrbetrieb auftretenden Belastungen einwandfrei erhalten bleibt. Wie der Starrachskörper 3 sind auch die beiden Längslenker 4, 5 in die Stabilisatorfunktion eingebunden und dementsprechend ausgebildet. Die beiden jeweils als Gußteil, gegebenenfalls auch Schmiedeteil hergestellten und anschließend an bestimmten Stellen spanabhebend nach- bzw. endbearbeiteten Längslenker 4, 5 sind demzufolge in der Vertikalen vergleichsweise biegesteif, um ihre Längsachse aber begrenzt tordierbar ausgebildet. Generell sind die beiden Längslenker 4, 5 in diesem Fall hinsichtlich ihrer Biegesteifigkeit und Torsionsfähigkeit auf den Gesamtstabilisierungseffekt in Verbindung mit dem torsionsfähigen Starrachskörper 3 abgestimmt, und zwar über entsprechende Bemessung und Formgebung ihrer Querschnitte. Im dargestellten Beispiel weist jeder der beiden gleich langen Längslenker 4, 5 zwischen seinem Fuß 23 bzw. 24 und einem andernendes vorhandenen Lagerauge 26 bzw. 27 einen stabförmigen Bereich mit einem sich über die Länge ändernden, zu dem Lagerauge 26 bzw. 27 hin kleiner werdenden Querschnitt auf. Zu dem besagten Gesamtstabilisierungseffekt trägt außerdem bei, daß die beiden Längslenker 4, 5 zur Fahrzeuglängsmittelachse spiegelsymmetrisch und - von oben betrachtet - derart gepfeilt zueinander stehend am Starrachskörper 3 angeschlossen sind, daß sie eine Trapezfläche einschließen, wobei der Abstand ihrer Lageraugen 26 bzw. 27, mit denen sie jeweils an den rahmenfest angebrachten Multifunktionslagerschilden 16 bzw. 17 angelenkt sind, kleiner ist als der Abstand ihrer achskörperseitigen Füße 23 bzw. 24. Wenn die erfindungsgemäße Starrachse in das Fahrzeug eingebaut ist, verlaufen die beiden Längslenker 4, 5- von der Seite her betrachtet- vom Starrachskörper 3 ausgehend schräg nach oben gerichtet zu den rahmenseitigen Multifunktionslageschilden 16 bzw. 17 hin.

Die erfindungsgemäße Starrachse garantiert einen bisher noch nie in einem Nutzfahrzeug dargestellten Fahr- und Federungskomfort. Dieser erreicht ein Optimum, wenn die größtmögliche Federspur festgelegt ist, das heißt, jedes der beiden Federbeine 6 bzw. 9 an seinem unteren Ende z. B. über ein in ein dortiges Lagerauge 28 bzw. 29 eingebautes Pratzengelenk 30 bzw. 31 an einer achskörperfesten Lagerstelle angelenkt ist, die räumlich im Bereich zwischen einem Längslenker 4 bzw. 5 und einem benachbarten achskörperendigen Radträger-Anschlußkopf 34 bzw. 35 so weit wie möglich zu letzterem hin gerückt angeordnet und jeweils durch einen am Starrachskörper 3 angebauten oder mitangeformten maulartigen Bock 32 bzw. 33 gebildet ist. Zu diesem hohen Fahr- und Federungskomfort trägt auch bei, daß die beiden Federbeine 6 bzw. 9 - von vorne gesehen - gepfeilt zueinander eingebaut sind, derart, daß ihre oberen Enden 36 bzw. 37 weniger weit voneinander beabstandet sind als ihre untenendigen Lageraugen 28 bzw. 29. Von der Seite her gesehen steht jedes Federbein 6 bzw. 9 entweder vertikal oder, je nach dem, ob es sich um eine geschobene oder - wie dargestellt - gezogene Starrachse handelt, leicht nach vorn oder hinten geneigt.

Mit seinem oberen Ende 36 bzw. 37 ist jedes Federbein 6 bzw. 9 räumlich oberhalb und seitlich außerhalb des benachbarten Rahmenlängsträgers 1 bzw. 2 an einem der beiden Federbeinhalter 12 bzw. 13 abgestützt und befestigt Die beiden Federbeinhalter 12 bzw. 13 bilden erfindungsgemäß zusammen mit der Quertraverse 14 den - von vorne gesehen - U-förmigen Querträger 38, der mit seiner Quertraverse 14 den Starrachskörper 3 und den Panhardstab 15 oben mit geringem Abstand dachbildend überbrückt und außerdem die beiden Rahmen-Längsträger 1, 2 stabilisierend miteinander verbindet.

Innerhalb des Querträgers 38 ist die Quertraverse 14 durch ein im Querschnitt hutförmiges Blechpreßteil, gegebenenfalls auch Schmiede- oder Gußteil, gebildet, das einen geraden Mittelabschnitt 39 und beiderseits desselben je einen schräg hochgezogenen Endabschnitt 40 bzw. 41 aufweist. Dessen äußere Enden sind nach Art eines Maules ausgebildet, mit dem der anzuschließende Federbeinhalter 12 bzw. 13 außen übergriffen wird. Jedes Maul wird durch einen Ausschnitt 42 bzw. 43 im Obergurt der Quertraverse 14 und beiderseits jedes Ausschnitts 42 bzw. 43 verbleibende Wangen 44, 45 bzw. 46, 47 gebildet, denen am jeweiligen Federbeinhalter 12 bzw. 13 vom und hinten zugehörige Anlageflächen 48, 49 bzw. 50, 51 zugeordnet sind. Im Bereich dieser Anlageflächen 48, 49 bzw. 50, 51 ist die Quertraverse 14 mit ihren Wangen 44, 45 bzw. 46, 47 abgestützt und dort durch entsprechende Bohrungen bzw. Löcher 52 durchdringende Schrauben 53 mit dem jeweiligen Federbeinhalter 12 bzw. 13 fest verbunden. In der Mitte seines Obergurtes kann die Quertraverse 14 zur Gewichtsreduzierung einen oder mehrere Durchbrüche aufweisen.

Die beiden Federbeinhalter 12 bzw. 13 sind vorzugsweise jeweils durch ein Stahlgußteil realisiert, das nach dem Abguß an erforderlichen Stellen spanabhebend nach - bzw. endbearbeitet wird. Jeder Federbeinhalter 12 bzw. 13 ist dabei, was seine Form anbelangt, zumindest in seinem oberen Bereich nach Art einer nach außen offenen Halbschale 54 bzw. 55 ausgebildet, von deren Begrenzungswand 56 bzw. 57 das zugehörige Federbein 6 bzw. 9 im Bereich seiner Luft- oder Schraubenfeder 7 bzw. 10 radial außen mit geringem Abstand von innen her partiell überdeckt wird und an deren Kopfplatte 58 bzw. 59 das jeweilige Federbein 6 bzw. 9 obenendig abgestützt und mittels je zwei Löcher 60 bzw. 61 durchdringenden Verschraubungen62 bzw. 63 befestigt ist. Ein Zentralloch 64 bzw. 65 in der Federbein-Kopfplatte 58 bzw. 59 dient zur Zentrierung des jeweiligen Federbeines 12 bzw. 13 und freien Durchtritt von dessen oberem Ende 36 bzw. 37. Etwa in seinem mittleren Höhen-Bereich weist jeder Federbeinhalter 12 bzw. 13 außenseitig an der Halbschale 54 bzw. 55 anschließend einen Anschlußflansch 66 bzw. 67 mit mehreren Schraubenlöchem 68 bzw. 69 auf. Mit den jeweiligen Anschlußflansch 66 bzw. 67, der etwa im Schubmittelpunkt gegeben ist, ist jeder der beiden Federbeinhalter 12 bzw. 13 außen am zugehörigen Rahmen-Längsträger 1 bzw. 2 angeflanscht und dort jeweils mittels mehrerer die Löcher 68 bzw. 69 und hierzu längsträgerintern fluchtende Löcher durchdringender Schrauben 70 mit zugehörigen Muttern befestigt. Verschiedene Durchbrüche 71 bzw. 72 in den Federbeinhaltern 12 bzw. 13 dienen zu deren Gewichtsreduzierung.

Einem der beiden Federbeinhalter 12 bzw. 13 ist erfindungsgemäß über seine eigentliche Funktion hinaus eine weitere Funktion aufgeprägt, nämlich jene, das Abstütz-, Halte- und Anlenkorgan für das eine Ende des Panhardstabes 15 zu bilden. Zu diesem Zweck ist der betreffende Federbeinhalter 12 bzw. 13 nach unten durch ein Lagerschild 73 verlängert, an dessen unterem Ende ein Maul und beiderseits desselben je ein Lagerauge 74 bzw. 75 ausgebildet sind, an denen der Panhardstab 15 z. B. über ein in sein einenendiges Lagerauge 76 eingebautes Pratzengelenk 77 abgestützt und mittels Schrauben 78 befestigt ist.

Mit seinem anderen, gegenüberliegenden Ende ist der Panhardstab 15 z. B. über ein in das dortige Lagerauge 79 eingebautes Pratzengelenk 80 an geeigneter Stelle des Starrachskörper-Längslenker-Verbundes angelenkt. Für den Fall der Anlenkung am Starrachskörper 3 ist an diesem ein Anschlußbock befestigt oder mitangeformt, an dem eine entsprechende Anlagefläche und Gewindebohrungen für die Anschraubung des Pratzengelenkes 80 angearbeitet sind. Im dargestellten Beispiel ist als Anlenkstelle einer der beiden Längslenker 4 bzw. 5 gewählt. Demzufolge ist an diesem ein seitlich nach innen vorspringender maulartiger Lagerbock 81 befestigt oder - wie dargestellt - mitangeformt, der eine äußere stirnseitige Anlagefläche und zwei interne Sackgewindelöcher für die Abstützung des Pratzengelenkes 80 und dessen Befestigung mittels Schrauben 82 aufweist. Der als im wesentlichen gerader Stab mit den endseitig angeschmiedeten Lageraugen 76, 79 ausgebildete Panhardstab 15 erstreckt sich aufgrund seiner wie vorstehend beschriebenen Anlenkung annähernd parallel oder leicht schräg zum Mittelbereich 18 des Starrachskörpers 3 verlaufend.

Die beiden Multifunktionslagerschilde 16, 17 weisen jeweils einen zur Fahrzeugmitte hin abragenden Vorsprung 83 bzw. 84 auf, in dessen von außen freiem Innenraum eine Anlenkstelle für die Starrachse gegeben ist, und zwar in Form einer Anlagefläche und einer Querbohrung 85, in die bei Montage ein das vordere Längslenker-Lagerauge 26 bzw. 27 durchdringender Lagerbolzen eingebaut und anschließend jede dieser beiden Lagerstellen von außen her durch einen mittels mehrerer Schrauben 86 am Multifunktionslagerschild 16 bzw. 17 befestigten Deckel 87 gesichert wird.

## Patentansprüche

1. Fahrgestell eines schweren Nutzfahrzeuges, mit einem Rahmen, dessen beide Längsträger (1, 2) über mehrere Querträger miteinander verbunden sind, und mit mehreren Achsen, von denen wenigstens eine eine Starrachse ist, über deren Starrachskörper (3) sich ein von vorne gesehen U-förmiger Querträger (38) erstreckt, der mit seiner Quertraverse (14) dachbildend auch einen darunter verlaufenden Panhardstab (15) überbrückt, **gekennzeichnet durch** folgende Merkmale:
a) der U-förmige Querträger (38) besteht aus drei Teilen, nämlich der Quertraverse (14) und zwei an deren Enden befestigten Federbeinhaltern (12, 13),
b) der U-förmige Querträger (38) ist mit jeweils einem Federbeinhalter (12, 13) an einem der beiden Rahmen-Längsträger (1, 2) befestigt,
c) je Achsseite ist ein aus einer Luft- oder Schraubenfeder (7, 10) und einem hierzu koaxialen Stoßdämpfer (8, 11) bestehendes Federbein (6, 9) vorgesehen,
d) jedes Federbein (6, 9) ist mit seinem oberen Ende (36, 37) am zugehörigen Federbeinhalter (12, 13) und mit seinem unteren Ende (28, 29) an einer Anlenkstelle (32, 33) am Starrachskörper (3) angeschlossen,
e) einer der beiden Federbeinhalter (12, 13) ist über seine anderen Funktionen hinaus auch noch als rahmenfester Halter für den Panhardstab (15) vorgesehen und für dessen Anlenkung an seinem unteren Bereich entsprechend ausgebildet.

2. Fahrgestell nach Anspruch 1, **dadurch gekennzeichnet, daß** die Starrachse nach Art einer selbststabilisierenden Verbundlenkerachse ausgebildet ist, demzufolge die Funktion eines das Wanken des Nutzfahrzeuges begrenzenden Stabilisators einem Bauteilverbund aufgeprägt ist, der aus dem Starrachskörper (3) und zwei fest an diesem angeschlossenen Längslenkern (4, 5) besteht, wobei
- die beiden Längslenker (4, 5) weit voneinander beabstandet jeweils stirnseitig vorn oder hinten am Starrachskörper mittels Schrauben (25) kraft- und gegebenenfalls auch formschlüssig angeflanscht sind,
- der Starrachskörper (3) in einem geraden Mittelbereich (18) zwischen den angeschlossenen Längslenkern (4, 5) definiert torsionsfähig ausgebildet ist,
- die beiden Längslenker (4, 5) in Vertikalrichtung gesehen vergleichsweise biegesteif, um ihre Längsachse aber begrenzt tordierbar ausgebildet und hinsichtlich ihrer Biegesteifigkeit sowie Torsionsfähigkeit auf den Gesamtstabilisierungseffekt in Verbindung mit dem torsionsfähigen Starrachskörper (3) abgestimmt sind durch entsprechende Bemessung und Formgebung der hierfür maßgeblichen Querschnitte, und
- diese Verbundlenkerachse mit den freien Enden ihrer beiden Längslenker (4, 5) an rahmenfesten Lagerstellen (16, 17) angelenkt ist.

3. Fahrgestell nach einem der vorhergehenden Ansprüche, **dadurch gekennzeichnet, daß** die als Teil des U-förmigen Querträgers (38) fungierende Quertraverse (14) durch ein im Querschnitt hutförmiges Blechpreßteil, gegebenenfalls auch Schmiede- oder Gußteil gebildet ist, das einen geraden Mittelabschnitt (39) und beiderseits derselben je einen schräg hochgezogenen Endabschnitt (40, 41) sowie gegebenenfalls in der Mitte seines Obergurtes einen oder mehrere zur Gewichtsreduzierung dienende Durchbrüche aufweist.

4. Fahrgestell nach Anspruch 3, **dadurch gekennzeichnet, daß** die äußeren Enden der Quertraverse (14) nach Art eines Maules ausgebildet sind, mit dem der anzuschließende Federbeinhalter (12, 13) außen übergriffen wird.

5. Fahrgestell nach Anspruch 4, **dadurch gekennzeichnet, daß** jedes Maul an der Quertraverse (14) durch einen Ausschnitt (42, 43) in dessen Obergurt und beiderseits jedes Ausschnitts (42, 43) verbleibende Wangen (44, 45; 46, 47) gebildet ist, denen am jeweiligen Federbeinhalter (12, 13) vorn und hinten zugehörige Anlageflächen (48, 49; 50, 51) zugeordnet sind, in deren Bereich die Quertraverse (14) mit ihren Wangen (44, 45; 46, 47) abgestützt und dort durch entsprechende Bohrungen bzw. Löcher (52) durchdringende Schrauben (53) mit den Federbeinhaltern (12, 13) fest verbunden ist.

6. Fahrgestell nach einem der vorhergehenden Ansprüche, **dadurch gekennzeichnet, daß** die je Achsseite eine Anlenkstelle (32, 33) für das untere Ende (28, 29) eines Federbeines (6, 9) am Starrachskörper (3) so weit wie möglich zu einem außenendigen Radträger-Anschlußkopf (34, 35) hingerückt angeordnet ist, daß sich eine größtmögliche Federspur und eine - von vorne gesehen - gepfeilte Anordnung der beiden Federbeine (6, 9) ergibt, bei der die oberen Enden (36, 37) derselben weniger weit voneinander beabstandet sind als deren untere Enden (28, 29).

7. Fahrgestell nach einem der vorhergehenden Ansprüche, **dadurch gekennzeichnet, daß** jedes der beiden Federbeine (6, 9) - von der Seite her gesehen - entweder vertikal oder leicht nach vorn oder hinten geneigt angeordnet ist.

8. Fahrgestell nach einem der vorhergehenden Ansprüche, **dadurch gekennzeichnet, daß** jedes der beiden Federbeine (6, 9) an seinem unteren Ende über ein in ein dortiges Lagerauge (28, 29) eingebautes Pratzengelenk (30, 31) an einer achskörperfesten Lagerstelle angelenkt ist, die durch am Starrachskörper (3) so weit wie möglich zu jeweils einem achskörperendigen Radträger-Anschlußkopf (34, 35) hingerückt mitangeformte und entsprechend spanabhebend nachbearbeitete Vorsprünge (32, 33) gebildet ist.

9. Fahrgestell nach einem der vorhergehenden Ansprüche, **dadurch gekennzeichnet, daß** jeder Federbeinhalter (12, 13) zumindest in seinem oberen Bereich nach Art einer nach außen offenen Halbschale (54, 55) ausgebildet ist, von deren Begrenzungswand (56, 57) das zugehörige Federbein (6, 9) im Bereich seiner Luft- oder Schraubenfeder (7, 10) radial außen mit geringem Abstand von innen her partiell überdeckt wird und an deren Kopfplatte (58, 59) das jeweilige Federbein (6, 9) obenendig abgestützt und mittels je zwei Löcher (60, 61) durchdringenden Verschraubungen (62, 63) befestigt ist, wobei ein Zentralloch (64, 65) in der Federbein-Kopfplatte (58, 59) zur Zentrierung des jeweiligen Federbeines (12, 13) und freien Durchtritt von dessen oberem Ende (36, 37) dient.

10. Fahrgestell nach Anspruch 9, **dadurch gekennzeichnet, daß** jeder Federbeinhalter (12, 13) etwa in seinem mittleren Höhenbereich einen außenseitig an der Halbschale (54, 55) anschließenden Anschlußflansch (66, 67) mit mehreren Schraubenlöchem (68, 69) aufweist, daß dieser Anschlußflansch (66, 67) etwa im Schubmittelpunkt gegeben ist, und daß jeder Federbeinhalter (12, 13) mit seinem Anschlußflansch (66, 67) über die Schraubenlöcher (68, 69) und hierzu längsträgerintern fluchtende Löcher durchdringende Schrauben (70) und zugehörigen Muttern am jeweiligen Rahmen-Längsträger (1, 2) angeflanscht befestigt ist.

11. Fahrgestell nach einem der vorgegebenen Ansprüche, **dadurch gekennzeichnet, daß** die beiden Federbeinhalter (12, 13) jeweils durch ein Stahlgußteil realisiert sind, das nach dem Abguß an erforderlichen Stellen spanabhebend nach- bzw. endbearbeitet wird und an geeigneten Stellen Durchbrüche (71, 72) zur Gewichtsreduzierung aufweist.

12. Fahrgestell nach einem der vorhergehenden Ansprüche, **dadurch gekennzeichnet, daß** einer der beiden Federbeinhalter (12, 13), um als Abstütz-, Halte- und Anlenkorgan für den Panhardstab (15) herangezogen werden zu können, nach unten durch ein Lagerschild (73) verlängert ist, an dessen unterem Ende ein Maul. und beiderseits desselben je ein Lagerauge (74, 75) ausgebildet sind, an denen der Panhardstab (15) über ein in ein an einem Ende gegebenes Lagerauge (76) eingebautes Pratzengelenk (77) und zugehörige Schrauben (78) befestigbar ist.

13. Fahrgestell nach Anspruch 12, **dadurch gekennzeichnet, daß** der Panhardstab (15) an seinem anderen, gegenüber liegenden Ende über ein in das dortige Lagerauge (79) eingebautes Pratzengelenk (80) an einem Lagerbock (81) angeschlossen wird, der entweder am Achskörper (3) oder einem der beiden je Achsseite an diesem sowie andernendes an rahmenfesten Lagerstellen (16, 17) angeschlossenen Längslenkern (4, 5) entweder mitangeformt oder dort angebaut ist und an dem eine entsprechende Anlagefläche und Gewindebohrungen für die Anschraubung des Pratzengelenkes (80) mittels Schrauben (82) vorgesehen sind.

## Claims

1. Chassis of a heavy-duty commercial vehicle with a frame whose two longitudinal members (1, 2) are connected with each other by means of several cross members, and with several axles, of which at least one is a rigid axle above whose rigid axle body (3) extends a cross member (38) which, if viewed from the front, is U-shaped, forms a roof together with its transverse beam (14) and bridges a Panhard rod (15) extending under said cross member (38), **characterised by** the following features:
a) the U-shaped cross member (38) consists of three parts, namely of the transverse beam (14) and of two spring-strut holders (12, 13) fastened to the ends of said transverse beam (14),
b) each end of the U-shaped cross member (38) is, by means of the respective spring-strut holder (12, 13), connected to one of the two frame longitudinal members (1, 2),
c) a spring strut (6, 9) consisting of an air or a coil spring (7, 10) and a shock absorber (8, 11) coaxially arranged to said air or coil spring (7, 10) is provided on each axle side,
d) the upper end (36, 37) of each spring strut (6, 9) is connected to the associated spring-strut holder (12, 13) and its lower end (28, 29) to a location point (32, 33) on the rigid axle body (3),
e) one of the two spring-strut holders (12, 13), in addition to its other functions, acts as a frame-mounted holder for the Panhard rod (15) for whose location it is suitably designed in its lower area.

2. Chassis according to Claim 1, **characterised in that** the rigid axle is designed as a self-stabilising twist-beam axle, which makes limiting the commercial vehicle's rolling motion the inherent stabiliser function of a component assembly consisting of the rigid-axle body (3) and of two longitudinal arms (4, 5) firmly connected to said rigid-axle body (3),
• the two longitudinal arms (4, 5) being spaced a large distance apart and the front face of each of them being flanged on to the front or rear side of the rigid-axle body in a non-positive and, if necessary, in a positive connection by means of bolts (25),
• the rigid-axle body (3) being defined as being torsion-capable in a straight centre area (18) between the two longitudinal arms (4, 5) connected up to it,
• the two longitudinal arms (4, 5), if viewed in vertical direction, being designed as having comparative flexural resistance but limited torsional capability about the longitudinal axis and, in respect of their flexural resistance and torsional capability, being adapted to the overall stabilising effect in conjunction with the torsion-capable rigid-axle body (3) through the suitable dimensioning and shaping of the cross-sections decisive for this, and
• this twist-beam front axle being located on frame-mounted bearing points (16, 17) by the free ends of its two longitudinal arms (4, 5),

3. Chassis according to one of the foregoing Claims, **characterised in that** the transverse beam (14) functions as a part of the U-shaped cross member (38) and is designed as a pressed sheet-metal part with a hat-shaped cross-section, or, if necessary, as a forged or cast part, that has a straight centre section (39) and an obliquely upward-curved end section (40, 41) at both ends of said straight centre section (39) and, if necessary, one or several weight-reducing openings in the centre of its upper flange.

4. Chassis according to Claim 3, **characterised in that** the outer ends of the transverse beam (14) are designed as a jaw covering the outside of the spring-strut holder (12, 13) to be connected up.

5. Chassis according to Claim 4, **characterised in that** each jaw on the transverse beam (14) is formed by a cutout (42, 43) in the upper flange of said jaw and by webs (44, 45; 46, 47) at both sides of each cutout (42, 43), to which webs (44, 45, 46, 47) contact faces (48, 49; 50, 51) on the front and rear sides of the respective spring-strut holder (12, 13) are associated, in the area of which contact faces (48, 49, 50, 51) the transverse beam (14) is supported by its webs (44, 45; 46, 47) and firmly connected with the spring-strut holders (12, 13) by means of bolts (53) passing through corresponding bores and holes (52) provided in said contact faces (48, 49, 50, 51).

6. Chassis according to one of the foregoing Claims, **characterised in that** on each axle side the one location point (32, 33) for the lower end (28, 29) of a spring strut (6, 9) is arranged on the rigid-axle body (3) as far as possible towards a wheel-carrier connecting head (34, 35) at the outer end of said rigid-axle body (3), that the spring track is as large as possible and the two spring struts (6, 9), if viewed from the front, are in backswept arrangement, the upper ends (36, 37) of said spring struts (6, 9) being less far apart than their lower ends (28, 29).

7. Chassis according to one of the foregoing Claims, **characterised in that** each of the two spring struts (6, 9), if viewed from the side, is arranged either vertically or slightly inclined towards the front or the rear.

8. Chassis according to one of the foregoing Claims, **characterised in that** each of the two spring struts (6, 9) is located on an axle-body-mounted bearing point via a claw-type joint (30, 31) installed in a bearing eye (28, 29) arranged at the lower end of said spring strut (6, 9), which axle-body-mounted bearing point is formed by protrusions (32, 33) constituting an integral part of said axle-body-mounted bearing point, arranged as far as possible towards each wheel-carrier connecting head (34, 35) at the outer end of said rigid-axle body (3), and suitably machined in a subsequent finishing process.

9. Chassis according to one of the foregoing Claims, **characterised in that** each of the spring-strut holders (12, 13) is, at least in its upper area, designed as a half shell (54, 55) open towards the outside, by whose limiting wall (56, 57) the associated spring strut (6, 9) is, in the area of its air or coil spring (7, 10), partially covered radially on the outside and at little distance from the inside, on the head plate (58, 59) of which limiting wall (56, 57) the upper end of each spring strut (6, 9) is supported and fastened by means of bolted connections (62, 63), each passing through two holes (60, 61), a central hole (64, 65) in the spring-strut head plate (58, 59) being provided for centring each spring strut (12, 13) and the free passage of its upper end (36, 37).

10. Chassis according to Claim 9, **characterised in that** approximately halfway up on its outside each spring-strut holder (12, 13) has a connecting flange (66, 67) which is adjacent to the half shell (54, 55), provided with several bolt holes (68, 69) and arranged approximately in the thrust centre and that each spring-strut holder (12, 13) is flanged on to the respective frame longitudinal member (1, 2) by its connecting flange (66, 67) with the aid of bolts (70) passing through the bolt holes (68, 69) and holes aligned to these on the inside of the longitudinal members and with the aid of associated nuts.

11. Chassis according to one of the foregoing Claims, **characterised in that** each of the two spring-strut holders (12, 13) is provided in the form of a cast steel part which, after the casting, is machined and finished at the points necessary and has openings (71, 72) at suitable points to reduce its weight.

12. Chassis according to one of the foregoing Claims, **characterised in that** for use as a supporting, holding and locating organ for the Panhard rod (15) one of the two spring-strut holders (12, 13) is extended downwards by means of a bearing plate (73) at whose lower end a jaw and a bearing eye (74, 75) at both sides of said jaw are provided, to which bearing eyes (74, 75) the Panhard rod (15) can be fastened by means of a claw-type joint (77) installed in a bearing eye (76) arranged at one end and by means of associated bolts (78).

13. Chassis according to Claim 12, **characterised in that** the other, opposite end of the Panhard rod (15) is connected to a bearing block (81) by means of a claw-type joint (80) installed in the bearing eye (79) provided there, which bearing block (81) either is an integral part of the axle body (3) or of one of the two longitudinal arms (4, 5) provided on each axle side, the one end of which longitudinal arms (4, 5) being connected to said axle body (3) and the other to the frame-mounted bearing points (16, 17), or is attached there and provided with a suitable contact face and with threaded bores for the fastening of the claw-type joint (80) by means of bolts (82).

## Revendications

1. Châssis pour un véhicule utilitaire lourd comportant un cadre dont les deux longerons (1, 2) sont reliés par plusieurs traverses et plusieurs essieux, dont au moins l'un est un essieu rigide, avec une traverse (38) à section en forme de U en vue de devant s'étendant par-dessus l'essieu rigide (3), et avec sa traverse (14), formant un toit, on chevauche une barre Panhard (15) passant en dessous,
**caractérisé en ce que**
a) la poutre transversale (38) en forme de U est composée de trois parties, à savoir la traverse (14) et aux deux extrémités deux supports de jambe à ressort (12, 13),
b) la poutre transversale (38) à section en forme de U est fixée par chaque fois un support de jambe de ressort (12, 13) à l'un des deux longerons de cadre (1, 2),
c) pour chaque côté d'essieu il est prévu une jambe à ressort (6, 9) formée d'un ressort pneumatique ou hélicoïdal (7, 10) et d'un amortisseur (8, 11) coaxial,
d) chaque jambe à ressort (6, 9) est reliée par son extrémité supérieure (36, 37) au support de jambe à ressort (12, 13) correspondant et par son extrémité inférieure (28, 29) à un point d'articulation (32, 33) du corps d'essieu rigide (3),
e) l'un des deux supports de jambe à ressort (12, 13) est prévu par son autre fonction, comme support solidaire du cadre pour la barre Panhard (15) et pour son articulation à sa zone inférieure.

2. Châssis selon la revendication 1,
**caractérisé en ce que**
l'essieu rigide est réalisé sous la forme d'un essieu à bras composites autostabilisés assurant la fonction d'une pièce composite en forme de stabilisateur limitant le roulis du véhicule, cette pièce composite étant formée du corps d'essieu rigide (3) et de deux bras longitudinaux (4, 5) reliés solidairement à celui-ci,
- les deux bras longitudinaux (4, 5) étant fixés par bride de manière très éloignée chaque fois du côté frontal à l'avant et à l'arrière au corps d'essieu rigide par des vis (25) suivant une liaison par la force et le cas échéant également par la forme,
- le corps d'essieu rigide (3) est réalisé avec une capacité de torsion définie dans sa zone centrale droite (18) entre les deux bras longitudinaux (4, 5) raccordés,
- les deux bras longitudinaux (4, 5) sont relativement rigides en flexion dans la direction verticale mais peuvent effectuer une torsion limitée autour de leur axe longitudinal et du point de vue de leur rigidité en flexion et de leur aptitude à la torsion ils sont accordés sur l'effet de stabilisation globale en liaison avec le corps d'essieu rigide (3) permettant un mouvement de torsion, par un dimensionnement et une mise en forme appropriée des sections déterminantes pour ces effets et
- cet essieu à bras composites est articulé aux extrémités libres de ces deux bras longitudinaux (4, 5) aux points de palier (16, 17) solidaires du cadre.

3. Châssis selon l'une quelconque des revendications précédentes,
**caractérisé en ce que**
la traverse (14) fonctionnant comme partie de la poutre transversale (38) en forme de U est constituée par un segment de tôle emboutie en forme de chapeau, le cas échéant également comme pièce forgée ou de fonte ayant une zone centrale droite (39) et de part et d'autre de celle-ci chaque fois un segment d'extrémité (40, 41) relevé en biais et le cas échéant au milieu de sa ceinture supérieure, un ou plusieurs passages servant à réduire le poids.

4. Châssis selon la revendication 3,
**caractérisé en ce que**
les extrémités extérieures de la traverse (14) sont réalisées en forme de mâchoires qui chevauchent extérieurement le support de jambe à ressort (12, 13) raccordé.

5. Châssis selon la revendication 4,
**caractérisé en ce que**
chaque mâchoire est formée au niveau de la traverse (14) par une découpe (42, 43) de sa ceinture supérieure et de part et d'autre de chaque découpe (42, 43), il subsiste des joues (44, 45 ; 46, 47) auxquelles sont associées sur chaque support de jambe à ressort (12, 13), des surfaces d'appui (48, 49, 50, 51) correspondantes pour l'avant et l'arrière, et au niveau desquelles s'appuie la traverse (14) avec ses joues (44, 45 ; 46, 47) en y étant reliée solidairement par des vis traversant les perçages ou trous (52) assurant la liaison avec les supports de jambe à ressort (12, 13).

6. Châssis selon l'une quelconque des revendications précédentes,
**caractérisé en ce que**
par côté d'essieu il est prévu un point d'articulation (32, 33) pour l'extrémité inférieure (28, 29) d'une jambe à ressort (6, 9) sur le corps d'essieu rigide (3), enfoncé aussi loin que possible dans une tête de raccordement de support de roue (34, 35) à l'extrémité extérieure pour avoir une trace de ressort aussi grande que possible et une disposition inclinée en vue de devant pour les deux jambes à ressort (6, 9), les extrémités supérieures (36, 37) étant moins éloignées que les extrémités inférieures (28, 29).

7. Châssis selon l'une quelconque des revendications précédentes,
**caractérisé en ce que**
chacune des deux jambes à ressort (6, 9) est en vue de côté soit verticale soit légèrement inclinée vers l'avant ou vers l'arrière.

8. Châssis selon l'une quelconque des revendications précédentes,
**caractérisé en ce que**
chacune des deux jambes à ressort (6, 9) est articulée à son extrémité inférieure par une articulation à griffe (30, 31) intégrée dans un oeillet de palier (28, 29) prévu à cet endroit, pour assurer l'articulation à un point de palier solidaire du corps d'essieu, ces points d'articulation formés sur le corps d'essieu rigide (3) étant éloignés autant que possible par rapport à la tête de raccordement de support de roue (34, 35) chaque fois à l'extrémité du corps d'essieu, des saillies (32, 33) étant usinées ensuite par enlèvement de copeaux.

9. Châssis selon l'une quelconque des revendications précédentes,
**caractérisé en ce que**
chaque support de jambe à ressort (12, 13) est réalisé au moins dans sa zone supérieure, à la manière d'une demi-coquille (54, 55) ouverte vers l'extérieur, et dont la paroi limite (56, 57) chevauche partiellement de l'intérieur et avec une faible distance, la jambe à ressort (6, 9) correspondante au niveau de son ressort pneumatique ou hélicoïdal (7, 10), radialement vers l'extérieur, en soutenant la jambe à ressort respective (6, 9) à son extrémité supérieure et en étant fixée à l'aide de vis (62, 63) traversant chaque fois deux orifices (60, 61), un orifice central (64, 65) de la plaque de tête de la jambe à ressort (58, 59) servant au centrage de la jambe à ressort respective (12, 13) et au passage libre de son extrémité supérieure (36, 37).

10. Châssis selon la revendication 9,
**caractérisé en ce que**
chaque support de jambe à ressort (12, 13) présente sensiblement à mi-hauteur, une bride de raccordement (66, 67) reliée du côté extérieur à la demi-coquille (54, 55) avec plusieurs trous à vis (68, 69) et cette bride de raccordement (66, 67) se trouve sensiblement au point médian de poussée et
chaque support de jambe à ressort (12, 13) est fixé par bride avec sa bride de raccordement (66, 67) par les trous de vis (68, 69) et des vis (70) traversant également les orifices alignés, internes aux longerons, ainsi que les écrous correspondants, sur chaque longeron (1, 2) du cadre.

11. Châssis selon l'une quelconque des revendications précédentes,
**caractérisé en ce que**
les deux supports de jambe à ressort (12, 13) sont chaque fois réalisés sous la forme d'une pièce en fonte d'acier qui après la coulée est usinée aux endroits appropriés par enlèvement de copeaux et travail de finition et la pièce présente, aux endroits appropriés, des passages (71, 72) pour réduire son poids.

12. Châssis selon l'une quelconque des revendications précédentes,
**caractérisé en ce que**
l'un des deux supports de jambe à ressort (12, 13) est utilisé comme organe d'appui de fixation et d'articulation de la barre Panhard (15) en étant prolongé vers le bas par un panneau de palier (73) et son extrémité inférieure comporte une mâchoire et de part et d'autre de celle-ci chaque fois un oeillet de palier (74, 75) auquel la barre Panhard (15) est fixée par l'intermédiaire d'une articulation à griffe (77) montée dans un oeillet de palier (76) prévu à une extrémité et en étant fixée avec des vis correspondantes (78).

13. Châssis selon la revendication 12,
**caractérisé en ce que**
la barre Panhard (15) est reliée par son autre extrémité opposée par une articulation à griffe (80) montée dans l'oeillet de palier correspondant dans un bloc palier (81), celui-ci étant soit formé soit monté sur le corps d'essieu (3) ou sur l'un des deux bras longitudinaux (4, 5) reliés suivant le côté de l'essieu par son extrémité et par son autre extrémité au point de palier (16, 17) solidaire du cadre, et ce bloc comporte une surface d'appui correspondante ainsi que des taraudages pour fixer l'articulation à griffe (80) à l'aide de vis (82).
